# EUROPÄISCHE PATENTANMELDUNG

(11) **EP 1 208 896 A1**
(43) Veröffentlichungstag der Anmeldung: **29.05.2002**
(21) Anmeldenummer: 01890329.4
(22) Anmeldetag: 27.11.2001
(51) Int. Cl.: B01D 15/02, B01J 8/04

(54) **Verfahren zur Trennung von Stoffgemischen**

(30) Priorität: 28.11.2000 AT 19982000
(71) Anmelder: VOGELBUSCH GESELLSCHAFT m.b.H., A-1050 Wien (AT)
(72) Erfinder: Pötschacher, Peter, Dipl.-Ing., 1030 Wien (AT); Hengelmüller, Jürgen, Dipl.-Ing., 2000 Stockerau (AT)
(74) Vertreter: Itze, Peter, Dipl.-Ing.

(57) **Zusammenfassung**

Die Erfindung betrifft ein Verfahren zum Trennen von Stoffgemischen nach dem Prinzip eines simulierten Fließbettes, wobei in gesteuerter zeitlicher Aufeinanderfolge an mehreren Stellen (3,4,5,6) des gepackten Bettes (1) Gemisch und Desorptionsmittel aufgegeben sowie Reinsubstanzen des getrennten Stoffgemisches abgezogen werden. Dabei wird nach jeder Gemischaufgabe die zugehörige Apparatur bzw. Leitung und/oder Verteileinrichtung mit Reinflüssigkeit, z.B Desorbens für das Reinprodukt, gespült.

## Beschreibung

Die Erfindung bezieht sich auf ein Verfahren zum Trennen von Stoffgemischen nach dem Prinzip eines simulierten Fließbettes, wobei in gesteuerter zeitlicher Aufeinanderfolge an mehreren Stellen des gepackten Bettes Gemisch und Desorptionsmittel aufgegeben sowie Reinsubstan- zen des getrennten Stoffgemisches abgezogen werden.

Bei dem bekannten Verfahren dieser Art, wie es durch die US-PS 5 156 736 geoffenbart ist, ist ein solches simuliertes Fließbett verwirklicht. Der Inhalt dieser Druckschrift wird hiermit durch Bezugnahme ausdrücklich in vorliegende Beschreibung aufgenommen. Bei dieser bekann- ten Ausbildung ist vorgesehen, daß in einem durchgehenden Absorptionsbett, bei welchem der Sorptionsträger festgehalten ist, ein Fließbett simuliert wird, indem an mehreren vorgegebenen Stellen je ein Verteiler zum Injizieren von Flüssigkeit bzw. zum Einsammeln von Produkt angeordnet wird, wobei diese Verteiler zyklusmäßig zum Aufgeben von zu trennendem Gemisch oder Desorptionsmittel bzw. zum Abziehen der Reinsubstanzen nach der Trennung mit der zugehörigen Aufgabeleitung bzw. mit dem zugehörigen Ablauf verbunden werden. Das Trennprinzip ist dabei jenes, daß die gesamte Kolonne von Trägerfluid durchstromt wird, welches über eine externe Leitung zirkuliert. Die Trennung der einzelnen Substanzen beruht auf dem unterschiedlichen Sorptionsverhalten an dem Träger, der das Bett aufbaut. Aufgrund der zyklischen Beaufschlagung mit zwischengeschaltetem Aufgeben von Desorptionsmittel und zyklischem Abziehen der gereinigten Produkte wird damit der Ablauf eines Fließbettes simuliert, wobei durch die zeitliche Aufeinanderfolge die örtliche Bewegung eines Fließbettes vorgetäuscht wird.

Bei Produkten, bei denen das Sorptionsvermögen der Reinsubstanz an der Trägersubstanz hoch ist und damit das Reinprodukt über jenen Verteiler abgezogen wird, über welchen im Schritt vorher das zu trennende Produktgemisch aufgegeben wurde, kommt es in jedem Schritt - im Ausmaß des durch die Geometrie des Verteilers gegebenen Volumens - zu erheblichen Verunreinigungen des Reinproduktes durch jene Substanzen, die außer dem Reinprodukt noch in dem Substanzgemisch vorhanden sind.

Der Erfindung liegt daher die Aufgabe zugrunde, ein Verfahren der eingangs genannten Art zu schaffen, bei welchem derartige Verunreinigungen vermieden sind.

Erfindungsgemäß wird dies dadurch erreicht, daß nach jeder Gemischaufgabe die zugehörige Apparatur bzw. Leitungen und/oder Verteileinrichtung mit Reinflüssigkeit, z.B. Desor- bens für das Reinprodukt, gespült wird. Dadurch wird verhindert, daß über diese Apparatur abgezogenes Reinprodukt von im Verteiler zurückgebliebenen, abzutrennenden Substanzen kon- taminiert wird, d.h. daß eine höhere Reinheit im Endprodukt erzielt wird. Die Reinigung erfolgt dabei immer unmittelbar nach der Aufgabe des Substanzgemisches, u.zw. an jenem Verteiler, der in diesem Schritt zur Gemischaufgabe verwendet würde.

Vorteilhafterweise kann zum Spülen die in der Apparatur bzw. Leitung und/oder Verteiler befindliche Gemischmenge mit der Reinflüssigkeit in das Bett gedrückt werden, was zur Folge hat, daß das gesamte eingebrachte Gut der Trennung zugeführt wird und außerdem lediglich Reinflüssigkeit in der Apparaur, dem Verteiler bzw. den Leitungen verbleiben, wodurch eine Kontaminierung des Reinproduktes, welches im nächsten Schritt abgezogen wird, ausgeschaltet ist. Weiters wird dadurch, daß immer die gesamte aufgegebene Gemischmenge der Auftrennung unterworfen wird, auch allfälligen Verlusten entgegenwirkt. Dabei kann die Menge der Reini- gungsflüssigkeit über den Massendurchfluß bzw. das Volumen geregelt werden, was sicherstellt, daß einerseits das gesamte Gemischvolumen in die Säule eingebracht wird, aber auch verhindert wird, daß anderseits zu viel Reinflüssigkeit in das chromatographische Konzentrationsprofil eintritt.

Im folgenden ist ein Ausführungsbeispiel des Erfindungsgegenstandes näher beschrieben, wobei der Einfachheit halber nur eine Ausführung mit vier Zonen dargestellt ist. Es können in gleicher Weise auch Anlagen mit einem Vielfachen von vier in analoger Weise aufgebaut sein und erfindungsgemäß betrieben werden.

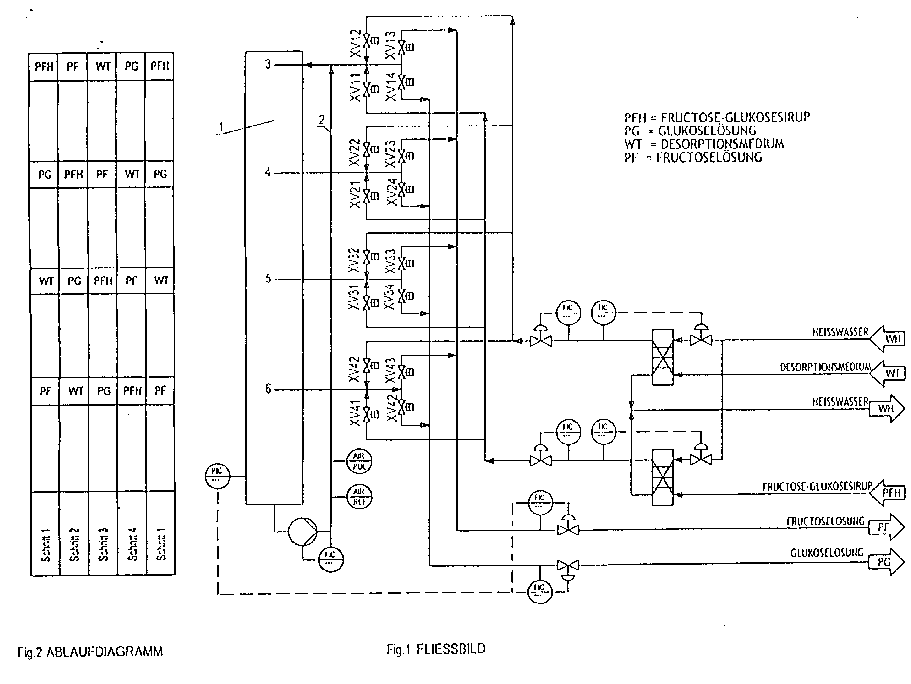

In Fig. 1 ist mit 1 ist eine aus einer durchgehenden Säule, welche mit einem Ionenaus- tauscherharz gefüllt ist, bestehende Trennsäule bezeichnet, von deren Boden eine Umwälzleitung 2 wegführt, die am Kopf der Säule 1 in dieselbe wieder einmündet u.zw. über eine Verteileinrichtung 3. Mit 4, 5, 6 sind weitere Verteil- und Sammeleinrichtungen vorgesehen, welche in das Harz des Bettes hineingreifen. Diese Verteileinrichtungen dienen einerseits zum Einbringen des zu trennenden Stoffgemisches und entsprechend zeitverzögert auch wieder zum Abziehen von gereinigtem Material. Die Ablaufsteuerung erfolgt über eine spezielle Ventilsteuerung, die in Fig. 1 schematisch dargestellt ist.

Fig. 2 zeigt der jeweiligen Aufgabe- bzw. Abzugsstelle ent- sprechend einem Schema, nach welchem das Produkt aufgegeben bzw. abgezogen wird. Die entsprechenden Mediencodes PFH, PG, WT, PF bedeuten: PFH Zugabe des Gemisches, PG Abzug der schwach adsorbierten Komponente, WT Aufgabe von Desorptionsmittel, PF Abzug der stark adsorbierten Komponente.

Beim Beispiel der Glucose/Fructosetrennung sind die Eingangsströme der Gleichge- wichtssirup (PFH) und das das Desorptions- bzw. das Elutionsmittel bildende Wasser (WT), die Ausgangsströme sind das Raffinat (PG), also der an Glucose angereicherte Prozeßstrom und der Extrakt (PF), also der fructosereiche Abzug.

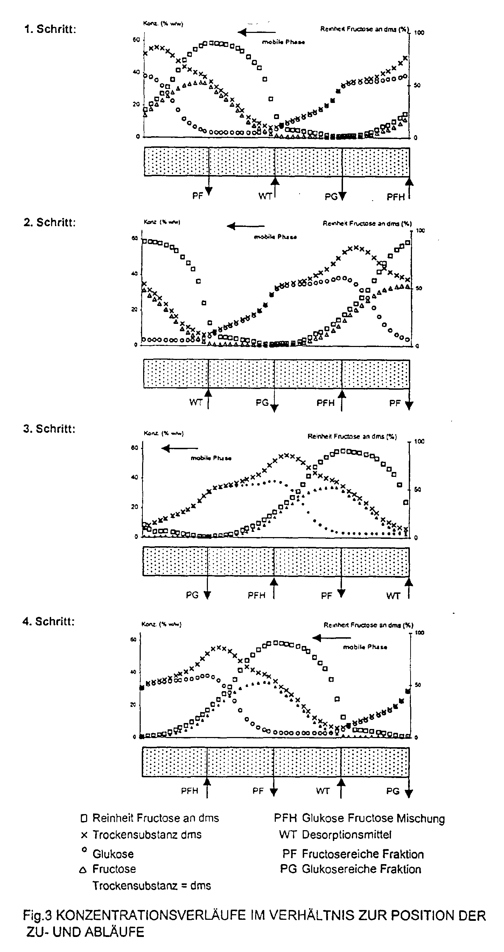

In Fig. 3 ist in dem Diagramm jeweils die Konzentration der einzelnen Substanzen in Relation zur Zeit aufgetragen, wobei die rechte Abszisse den Anteil an Fructose an Trockensubstanz enthält. Unter jedem Diagramm ist schematisch die Säule gezeichnet, wobei durch die Pfeile angedeutet ist, wo Gut bzw. Desorptionsflüssigkeit aufgegeben und Produkt abgezogen wird. ("PG" bedeutet dabei Glucoseabzug, "PFH" bedeutet Aufgabe von Gemisch, "PF" bedeutet Abzug von Fructose und "WT" bedeutet Aufgabe von Desorptionsmittel).

Während der Gleichgewichtssirup aufgegeben wird, wird synchron das an Fructose verarmte Medium an einem Verteilersystem, welches in der Strömungsrichtung weiter unten liegt, abgezogen (Raffinat). Dies ist möglich, weil die Fructose an dem mit Calcium beladenen Harz stärker gebunden wird als die Glucose und die in geringeren Mengen vorkommenden Oligosaccharide (Ligandenaffinität). Die so angereicherte Fructose wird später mit Wasser als Elutionsmittel vom Harz regeneriert. Dies erfolgt nicht zeitlich, sondern räumlich verschoben in der Säule weiter oben.

Die Steuerung des chromatographischen Systems wird über ein computerisiertes Prozess- kontrollsystem (PCS) koordiniert. Sowohl der Einstoß des Zuckergemisches PFH und des Elutionsmittels WT als auch die Abzüge der mit Glucose PG und mit Fructose PF angereicherten Zuckerlösungen erfolgen gleichzeitig. All diese Prozessströme haben verschiedene Werte, stehen aber zueinander in bestimmten Verhältnissen. Die Steuerung dieser Werte erfolgt durch das PCS System.

Da diese Aufgabe- und Abnahmepunkte an der Säule den wandernden Komponenten nachgeschaltet werden, wird dieses System "simulated moving bed" genannt. Wann bzw. wo aufgegeben bzw. abgenommen wird, erfolgt durch eine Serie von Auf/Zu-Ventilen, deren Aktion ebenfalls vom PCS System oder über eine Schrittsequenz zeitlich genau koordiniert wird.

Der Gegenstrom des Harzbettes wird durch die örtliche Veränderung der Einbzw. Auslaufpunkte mit der Zeit simuliert. Es werden diese Punkte in Richtung der Bewegung der einzelnen zu trennenden Komponenten weitergeschaltet. Dies wird in konstanten Zeitintervallen, allgemein als "step time" bezeichnet, durchgeführt. Wie bereits oben angeführt, müssen die Ströme zueinander mengenmäßig koordiniert werden, um einen Anstieg des Druckes in den Kolonnen zu vermeiden. Ebenso muß die Menge an gelösten Stoffen im Einlauf der Summe der gelösten Stoffe in den Ablaufströmen entsprechen, um die Konzentrationen im System konstant zu halten, damit sich ein Fließgleichgewicht einstellt.

Um höhere Reinheiten im Produkt zu erzielen, wird nicht während der gesamten Schrittzeit eingestoßen und abgezogen, sondern nur während eines kürzeren Zeitabschnittes, der sogenannten "feed time". Auf diese Art und Weise können engere Zuckerfraktionen aus dem Konzentrationsprofil "geschnitten" werden. Nachdem das Einstoßen und Abziehen beendet wurde, wird im chromatographischen System nur zirkuliert, um nach Ablauf der "step time" die Zu- und Ablaufpunkte dem gewanderten Zuckerprofil nachzuführen und zu schalten. Ein neuer Schritt beginnt. Obwohl der Einstoß und das Abziehen sequenziell unterbrochen erfolgt, handelt es sich um einen kontinuierlichen Prozess, da die chromatographische Trennung kontinuierlich arbeitet. Die Konzentrationsprofile der Zucker in der Kolonne bewegen sich folglich kontinuierlich.

Die Nachschaltung dieser Aufgabe- und Abnahmepunkte muß dabei genau auf die Bewegung der einzelnen Komponenten im chromatgraphischen System abgestimmt sein. Um dieses Nachschalten der Zu- und Ablaufpunkte an den zeitlich und örtlich richtigen Stellen des Konzentrationsprofils in der Kolonne zu positionieren, ist es notwendig diesen Konzentrationsverlauf genau zu kennen. Aus diesem Grund ist es notwendig, die Glucose- und Fructosekonzentration mittels Inline/Online-Messung zu verfolgen. Diese Werte werden simultan in das PCS System übertragen. Auf diese Weise ist es möglich, ständig ein aktuelles Konzentrations- profil anzuzeigen. Durch die Eingabe von Parametern wie das Verdrängungsvolumen oder die verschiedenen Zeitparameter ist es möglich, den Prozess zu steuern. Über die Eingabe von verschiedenen Prozeßparametem kann dann der laufende Prozes beeinflußt und so optimiert werden.

In Fig. 3 sind die Konzentrationsverläufe der Komponenten (Glukose und Fructose), der Gesamttrockensubstanzverlauf und der Verlauf der Reinheit (Gehalt der Fructose in der Gesamttrockensubstanz) gegen die Zeit aufgetragen. Die Balken darunter symbolisieren die Säule mit ihren einzelnen Zonen. Diese kombinierte Darstellung gibt somit die Position der einzelnen Komponenten in der Säule zu einer bestimmten Zeit an. Die Pfeile an den betreffenden Verteiler geben die Einstoß- bzw. Ablaufpositionen eines bestimmtem Prozessstromes in Korrelation zum aktuellen Schritt wieder.

Die mobile Phase wird in der Säule von oben nach unten bewegt (Fig.1) im Chromato- gramm (Fig.3) ist die Bewegung der mobilen Phase von rechts nach links dargestellt. Die Zucker bewegen sich mit unterschiedlicher Geschwindigkeit in dieselbe Richtung.

Die Sequenz startet im Schritt 1, sobald die Zone mit dem höchsten Trockensubstanzgehalt den Kopf der Kolonne erreicht hat. Die Einstoßphase beginnt mit dem Einstoß des Stoffge- misches PFH am Kopf der Kolonne (siehe Fig.2 oberste Zeile, 1.Spalte), dazu wird das Ventil XV11 (s.Fig.1) geöffnet. Alle anderen Ventile am Ventilkreuz des Kopfverteilers (3) bleiben geschlossen. Zeitgleich wird am Mittelverteiler (4) mit PG die mit Glukose angereicherte Fraktion, durch Öffnen des Ventils XV24, abgezogen. Dies erfolgt in jener Zone des Chromatogramms, in dem die Glukose angereichert vorliegt (Fig.3).

Synchron wird am Mittelverteiler (5) das Desorptionsmittel (WT) eingespeist und am Mittelverteiler (6) die an Fructose reiche Fraktion (PF) abgezogen. Zu diesem Zweck werden die Ventile XV 32 und XV 43 geöffnet. Das Öffnen aller erwähnten Ventile erfolgt zeitlich syn- chron. Nach Beendigung der Einstoßphase werden alle oben erwähnten Ventile geschlossen. Beim Erreichen der Einstoßphase des 2.Schritts (siehe Fig.3, 2. Schritt) fließen die Prozessströme, wie im Ablaufdiagramm (Fig.2) in der Spalte 2 dargestellt.

In dieser Art und Weise werden die einzelnen Schritte der Positionen der Komponenten nachgeschaltet, bis diese das gesamte chromatographische System, bestehend aus dem Sorptionsbett 1 und der Zirkulationsleitung 2, durchlaufen sind.

In der vorliegenden Beschreibung besteht das System aus 4 Zonen die nach 4 Schritten durchlaufen werden. Das System kann aber, wie schon angeführt, aus n mal 4 Zonen bestehen, zum Durchlauf eines Zyklus sind dann korrespondierend n mal 4 Schritte notwendig. n sind alle ganzen positiven Zahlen (1, 2, 3,...).

## Patentansprüche

1. Verfahren zum Trennen von Stoffgemischen nach dem Prinzip eines simulierten Fließbettes, wobei in gesteuerter zeitlicher Aufeinanderfolge an mehreren Stellen des gepackten Bettes Gemisch und Desorptionsmittel aufgegeben sowie Reinsubstanzen des getrennten Stoffgemisches abgezogen werden, **dadurch gekennzeichnet, daß** nach jeder Gemischaufgabe die zugehörige Apparatur bzw. Leitung und/oder Verteileinrichtung mit Reinflüssigkeit, z.B Desorbens für das Reinprodukt, gespült wird.

2. Verfahren nach Anspruch 1, **dadurch gekennzeichnet, daß** zum Spülen die in der Arma- tur bzw. Leitung und/oder Verteileinrichtung befindliche Gemischmenge mit der Reinflüssigkeit in das Bett gedrückt wird.

3. Verfahren nach Anspruch 1 oder 2, **dadurch gekennzeichnet, daß** die Menge der Rein- flüssigkeit über den Massendurchfluß bzw. das Volumen geregelt wird.
